# EUROPÄISCHE PATENTSCHRIFT

(11) **EP 1 610 124 B1**
(45) Veröffentlichungstag und Bekanntmachung des Hinweises auf die Patenterteilung: **02.05.2018**
(21) Anmeldenummer: 05005558.1
(22) Anmeldetag: 15.03.2005
(51) Int. Cl.: G01N 30/24, G01N 30/12

(54) **Verfahren zur Probenaufgabe für ein Probenanalysegerät und Linerhandhabungssystem**
Process for sample injection into a sample analysis device and liner handling system
Procédé d'injection d'un échantillon dans un dispositif d'analyse d'échantillons et système de manipulation de manchons

(30) Priorität: 05.04.2004 DE 102004016670
(43) Veröffentlichungstag der Anmeldung: 28.12.2005
(73) Patentinhaber: Gerstel Systemtechnik GmbH & Co. KG, 45473 Mülheim an der Ruhr (DE)
(72) Erfinder: Bremer, Ralf, 46117 Oberhausen (DE); Rose, Bernhard, 40627 Düsseldorf (DE)
(74) Vertreter: Sparing Röhl Henseler

(56) Entgegenhaltungen:
- DE-C1- 4 419 596
- DE-C1- 10 210 048
- US-A1- 2002 098 594
- US-B1- 6 565 634

## Beschreibung

Die Erfindung betrifft ein Verfahren zur Probenaufgabe für ein Probenanalysegerät und ein Linerhandhabungssystem sowie Komponenten hiervon.

In der Gaschromatographie werden Proben zur Probenanalyse über Aufgabeeinrichtungen in den Gaschromatographen eingeführt, wobei die Proben von wechselbaren, mittels Trägergas durchströmbaren, rohrförmigen Probenbehältern, sogenannten Linern, aufgenommen werden. Übliche Liner können zwar in Bezug auf die Aufnahme der Proben in ihrem Inneren speziell ausgebildet oder ausgerüstet sein, sind jedoch außen - eventuell bis auf eine austrittsseitige Einschnürung - zylindrisch und glatt sowie im allgemeinen als Glas- oder Edelstahlrohre standartisiert ausgebildet.

Da ein manueller Linerwechsel sowohl als Vorgang an sich als auch in Bezug auf längeren ununterbrochenen Betrieb zeitaufwendig ist, ist es bekannt, Liner mit speziellen Köpfen zu versehen, die einen automatisierten Wechsel ermöglichen. Diese speziellen Liner lassen sich dann aber nur im Zusammenhang mit bestimmten Aufgabeeinrichtungen und Wechslern verwenden. Austauschbarkeit ist nicht gegeben.

Aus WO 00/50885 ist ein Liner bekannt, der gaseintrittsseitig mit einem Flansch versehen ist, auf dem ein Septum angeordnet ist, das mittels einer Verschlußkappe an dem Flansch gehalten wird.

Aus US 5 686 656 ist es bekannt, einen gegenüber den Standardmaßen vergrößerten Liner im Zusammenhang mit einem einen Handhabungsflansch aufweisenden Linerträger zu verwenden. Hierbei wird der Linerträger von einem Kopplungselement an der Aufgabeeinrichtung aufgenommen.

Aufgabe der Erfindung ist es, ein Verfahren zur Probenaufgabe für ein Probenanalysegerät zu schaffen, das einen automatischen Linerwechsel ohne die Verwendung speziell ausgebildeter Liner ermöglicht.

Diese Aufgabe wird entsprechend den Merkmalen des Anspruchs 1 gelöst.

Hierdurch lassen sich gewöhnliche, handelsübliche, nicht in Bezug auf ihren Transport speziell ausgebildete, praktisch rohrförmige oder zumindest kopfseitig oder eintrittsseitig rohrförmige Liner etwa aus Glas oder Stahl verwenden, die dabei zugleich auch als Probennehmer einsetzbar sein können.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.
Fig. 1 zeigt im Schnitt eine Kaltaufgabeeinrichtung für einen Gaschromatographen mit einem eingesetzten Liner.
Fig. 2 zeigt schematisch den Aufbau einer Probenvorbereitung und -aufgabe für einen Gaschromatographen.
Fig. 3 zeigt einen Liner mit einer weiteren Ausführungsform eines Transportkopfes.
Fig. 4 zeigt einen Liner mit einem Transportkopf gemäß Fig. 3 in Zusammenhang mit einem Probenbehälter.
Fig. 5 zeigt einen Aufsatz für eine Aufgabevorrichtung.
Fig. 6 zeigt einen Liner mit einem modifizierten Transportkopf.

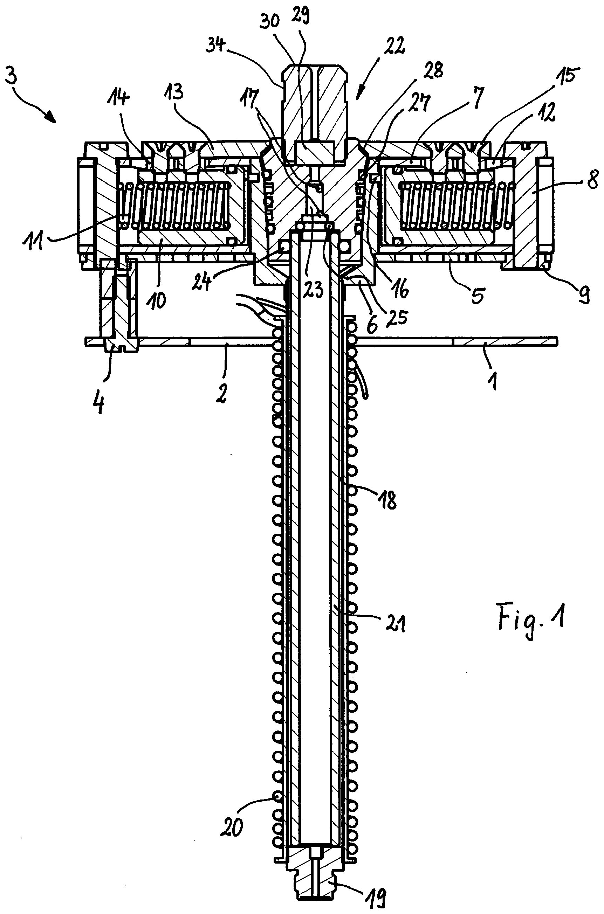

Die in Fig. 1 dargestellte Kaltaufgabeeinrichtung K für einen Gaschromatographen umfaßt eine Grundplatte 1 mit einer Durchtrittsöffnung 2, wobei mit Abstand zur Grundplatte 1 eine Lineraufnahme 3 mittels Schrauben 4 lösbar befestigt ist. Die Lineraufnahme 3 umfaßt eine runde, gelochte Trägerplatte 5, die eine mittlere Aufnahmeöffnung für einen darin befestigten Aufnahmetopf 6 umfaßt. Auf der Trägerplatte 5 aufliegend sind mehrere, sich radial bis zum Aufnahmetopf 6 erstreckende Hülsen 7, die rechteckigen oder runden Querschnitt aufweisen können, mittels Schrauben 8 und Muttern 9 befestigt sind. Die Hülsen 7 nehmen jeweils einen darin radial verschiebbaren Kolben 10 auf, der mittels einer sich an der zugehörigen Schraube 8 abstützenden Feder 11 radial einwärts vorgespannt ist. Die Hülsen 7 sind oberseitig mit einem Schlitz 12 versehen. Auf den Hülsen 7 befindet sich jeweils eine Spannbacke 13, die über in dem Schlitz 12 laufende Führungssteine 14 radial verschiebbar ist. Die jeweilige Spannbacke 13 ist mit dem zugehörigen Kolben 10 über Schrauben 15 verbunden, die auch die Führungssteine 14 tragen. Am Außenumfang des Aufnahmetopfes 6 befindet sich eine mit einem Druckmedium, insbesondere Druckluft, beaufschlagbare umlaufende, außerhalb des Bereichs der Hülsen 7 von außen abgeschlossene Nut 16, über die die Kolben 10 gegen die Kraft der Federn 11 beaufschlagbar und damit zusammen mit den Spannbacken 13 radial nach außen verschiebbar sind.

Der Aufnahmetopf 6 ist mit in seinem Inneren mündenden Bohrungen 17 zur Trägergaszufuhr bzw. Spülgasabfuhr und bodenseitig mit einer Öffnung versehen, in der ein Führungsrohr 18 befestigt ist, das bodenseitig mit einem Verbindungsstück 19 versehen ist. Auf dem Führungsrohr 18 ist außen eine Heizeinrichtung 20 befestigt, die sich bis zum Verbindungsstück 19 erstreckt und von diesem gehalten wird. Außerdem ist eine nicht dargestellte Kühlung beispielsweise über ein Peltierelement vorgesehen.

Die Kaltaufgabeeinrichtung K ist zur Aufnahme eines Liners 21, der mit einem Transportkopf 22 versehen ist, gestaltet.

Der rotationssymmetrische Transportkopf 22 besitzt eine in Axialrichtung hiervon angeordnete, gestufte Bohrung 23, die benachbart zum linerseitigen Aufnahmeende mit einer umlaufenden Nut versehen ist, die einen O-Ring 24 aufnimmt. Der O-Ring 24 umgreift den rohrförmigen Liner 21 mit Reibschluß, wobei das in den Transportkopf 22 eingesetzte Ende des Liners 21 gegen eine Schulter 25 der Bohrung 23 stößt. Am Umfang des Transportkopfes 22 sind axial beabstandet zwei umlaufende Nuten 26 angeordnet, in deren Bereich die Bohrungen 17 des Aufnahmetopfes 6 münden. Oberhalb, zwischen und unterhalb der Nuten 26 sind O-Ringe 27 angeordnet, um die Bereiche der Nuten 26 gegeneinander abzudichten.

An dem dem Liner 21 abgewandten Ende ist der Transportkopf 22 mit einer schrägen Schulter 28 versehen, mit der die entsprechend angeschrägten Spannbacken 13 unter Einwirkung der auf die Kolben 7 wirkenden Federvorspannung in Eingriff gelangen, um den leicht konischen Transportkopf 22 in den korrespondierend leicht konischen Innenraum des Aufnahmetopfes 6 zu drücken, so daß die O-Ringe 27 in dichtenden Eingriff mit der Innenseite des Aufnahmetopfes 6 gelangen. Der Liner 21 selbst wird dabei von dem Führungsrohr 18 aufgenommen.

An der dem Liner 21 abgewandten Stirnseite des Transportkopfs 22 ist unter Zwischenschaltung eines von einer Spritzennadel durchstechbaren Septums 29 ein mit einer Nadelführungsbohrung versehenes Nadelführungsstück 30 eingeschraubt. Bei der in Fig. 1 dargestellten Ausführungsform des Transportkopfes 22 ist dieser mit Septum 29 versehen, er kann jedoch auch septumlos ausgebildet sein, wie später beschrieben wird.

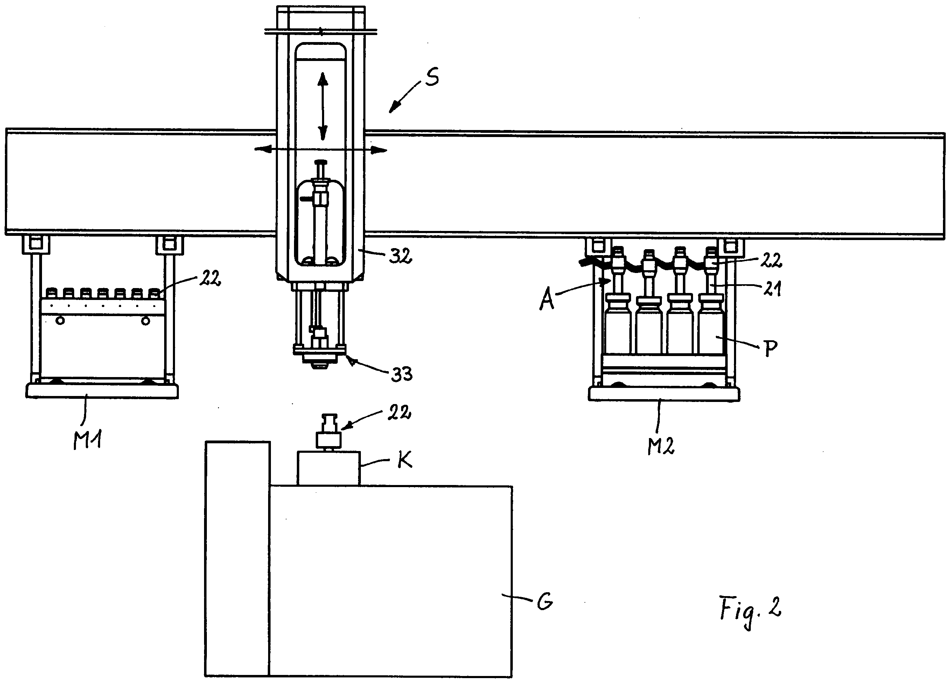

Fig. 2 zeigt einen Aufbau einer Probenvorbereitung und -aufgabe für einen Gaschromatographen G, der mit einer Aufgabeeinrichtung K versehen, die Liner 21 mit Transportköpfen 22 aufnehmen kann, wie sie beispielsweise vorstehend beschrieben ist. Ferner ist ein Magazin M1 vorhanden, das in einem vorbestimmten Muster eine Vielzahl von Blindbohrungen 31 zur gegebenenfalls abgedichteten Aufnahme von Linern 21 mit Transportköpfen 22 aufweist. Außerdem ist ein Aufnahmerahmen M2 für Probenbehälter P (vials) vorgesehen. Mittels einer automatischen Probenvorbereitungs- und/oder -aufgabeeinrichtung, eines sogenannten Autosamplers S, der mit einem horizontal und vertikal verfahrbaren Arm 32 versehen ist, der mit einer nicht dargestellten Einrichtung zum Ergreifen einer Spitze und ferner mit einem insbesondere elektromagnetisch betätigbaren Greifer 33 für die Transportköpfe 22 ausgerüstet ist, lassen sich die Liner 21 handhaben. Hierbei ist der Greifer 33 zweckmäßigerweise so gestaltet, daß eine Probenvorbereitung bzw. -aufgabe mittels einer Spritze durch den Greifer 33 hindurch erfolgen kann.

So kann der Autosampler S mit seinem Greifer 33 in vorbestimmter Reihenfolge aus dem Magazin M1 probenlose Liner 21 durch Ergreifen ihrer Transportköpfe 22 entnehmen und entsprechend in die Aufgabeeinrichtung K des Gaschromatographen G einsetzen. Nach jedem Einsetzen fährt der Autosampler S mit einer Spritze entsprechend einem vorbestimmten Programm über einen zugehörigen, mit einem Septum versehenen Probenbehälter P, entnimmt mittels der Spritze eine Probe, fährt mit der Spritze über den Transportkopf 22 des in der Aufgabeeinrichtung K befindlichen Liners, fährt die Spritzennadel durch das Septum 29 in den Liner 21 und gibt über die Spritzennadel die zu untersuchende Probe in den Liner 21 auf. Danach wird die Spritzennadel wieder herausgezogen, während die Probenaufgabe erfolgt. Schließlich wird der Liner 21 an seinem Transportkopf 22 vom Greifer 33 an einer umlaufenden Nut 34 erfaßt aus der Aufgabeeinrichtung K entfernt und wieder im Magazin M1 abgelegt, etc. Der Liner 21 kann einmal oder n-mal verwendet werden, so daß dieses Vorgehen jedes Mal oder nach jedem n-ten Gebrauch des Liners 21 erfolgt.

Die Liner 21 können aber auch bereits mit einer zu untersuchenden Probe bestückt magaziniert sein. Hierbei ist es zweckmäßig, wenn die Liner 21 vom Magazin M1 in Sacklochbohrungen nach außen abgedichtet aufgenommen werden. Der Autosampler S entnimmt in diesem Fall die Liner 21 aufeinanderfolgend, setzt sie in die Aufgabeeinrichtung K ein, entnimmt sie nach der Probenaufgabe wieder und bringt sie zum Magazin M1 zurück.

Außerdem kann vorgesehen sein, daß der Autosampler S probenlose Liner 21 dem Magazin M1 entnimmt, diese in entsprechende Aufnahmeköpfe A von Probenbehältern P einsetzt, wo die Liner 21 die zu untersuchende Probe aufnehmen, um anschließend in die Aufgabeeinrichtung K eingesetzt zu werden.

Gegebenenfalls kann anstelle eines Autosamplers S auch eine spezielle Wechseleinrichtung nur für den Liner 21 eventuell zusammen mit einem gewöhnlichen Autosampler S verwendet werden.

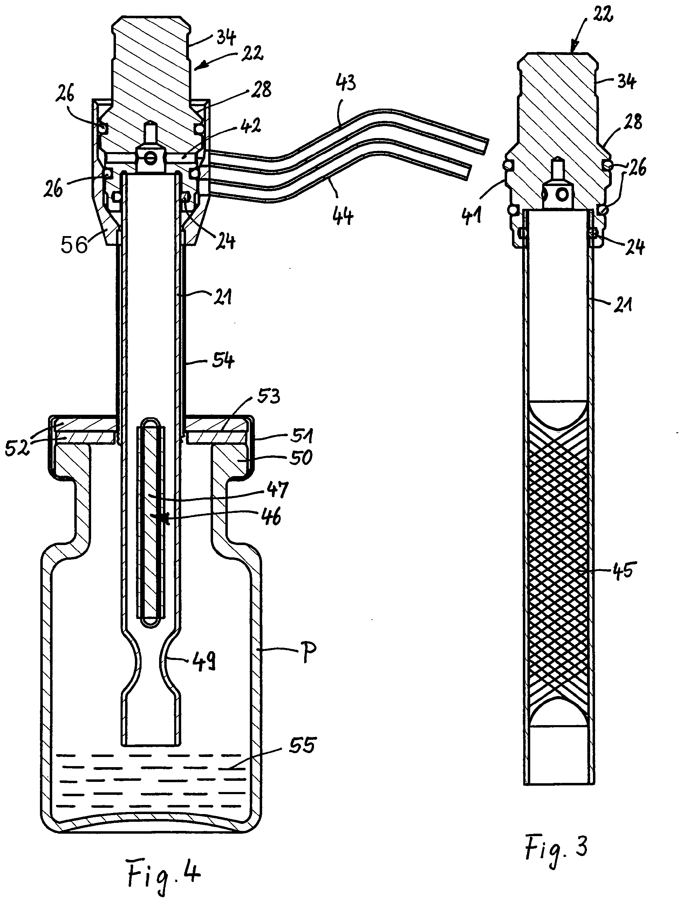

Der Liner 21 kann, wie in Fig. 3 dargestellt, auch einen Transportkopf 22 aufweisen, der mit einer Schulter 41 versehen ist, unterhalb von der eine (oder mehrere) Bohrung 42 am Außenumfang des Transportkopfes 22 mündet, die mit dem Inneren des Liners 21 in Verbindung steht, vgl. Fig. 4.

Der Liner 21 kann in einen entsprechenden Aufnahmetopf 6 der Aufgabeeinrichtung K und auch, wie dargestellt, eines Probenbehälter P eingesetzt werden, wobei der Aufnahmetopf 6 eine gestufte Bohrung aufweist, so daß bei eingesetztem Transportkopf 22 benachbart zur Mündung der Bohrung 42 ein Ringraum und benachbart zum eingesetzten Ende des Transportkopfes 22 ein weiterer, durch einen der O-Ringe 26 gegenüber dem einen Ringraum abgedichteter Ringraum gebildet werden, die jeweils mit einer am Aufnahmetopf 6 angebrachten Gasleitung 43, 44 verbunden sind, um gegebenenfalls Gas durch den Probenbehälter P und den Liner 21 zu führen. Dementsprechend können zu untersuchende Substanzen nicht nur passiv (d.h. ohne Gaszirkulation), sondern auch dynamisch auf einer entsprechenden Phase im Liner 21 zur späteren Analyse gesammelt werden. Hierbei ist der Liner 21 als Probenehmer wirksam.

Zum Sorbieren oder Adsorbieren von zu untersuchenden Substanzen kann der Liner 21 beispielsweise ein Packung 45, vgl. Fig. 3, oder einen Sammler 46 aus einem im wesentlichen stabförmigen Träger 47 mit einer aktiven Beschichtung 48, Fig. 4, der in dem Liner 21 über eine Einschnürung 49 gegen herausfallen gehalten wird, aufnehmen. Es gibt jedoch ein Vielzahl weiterer Möglichkeiten der Ausgestaltung von Linern 21 zum Sorbieren oder Adsorbieren von zu untersuchenden Substanzen, die hier infrage kommen.

Bei der in Fig. 4 dargestellten Ausführungsform des Probenbehälters P ist vorgesehen, daß auf dessen Flansch 50 mittels einer Kappe 51 zwei Septen 52 übereinander angebracht sind, zwischen denen eine dünne Folie 53, beispielsweise eine Aluminiumfolie, dichtend eingeklemmt ist. Der auf den Probenbehälter P aufsetzbare Aufnahmetopf 56 trägt unterseitig ein Rohr 54, das durch die Kappe 51 und die Folie 53 hindurchstoßbar ist, während es mit mindestens einem Septum 52 in dichtenden Eingriff gelangt. Durch das Rohr 54 hindurch läßt sich der Liner 21 in den Probenbehälter P etwa, wie in Fig. 4 dargestellt, zur gegebenenfalls dynamischen Headspace-Extraktion oder gegebenenfalls auch zum Eintauchen in die im Probenbehälter P befindliche Probe 55 einführen.

Es ist aber auch möglich, eine Gaszufuhr zum Probenbehälter P anstatt über den Transportkopf 22 über seinen Verschluß zu realisieren.

Aufgabeeinrichtungen K, die nicht für Liner 21 mit Transportköpfen 22 ausgerüstet sind, besitzen aber allgemein einen Gewindestutzen, der dazu genutzt werden kann, einen Aufsatz 60 für die Aufgabeeinrichtung K anzubringen, der die Verwendung von Linern 21 mit Transportköpfen 22 ermöglicht.

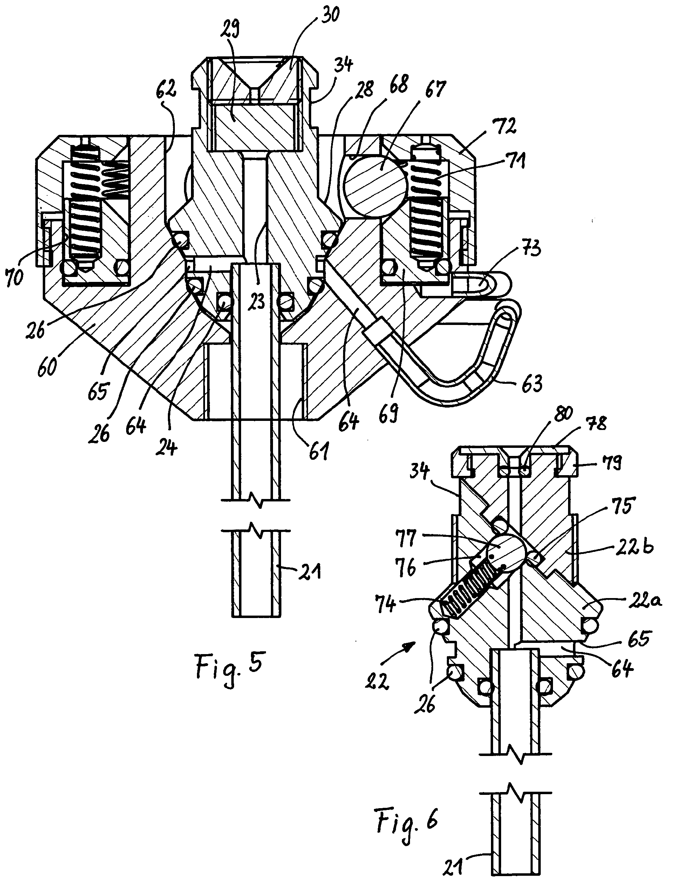

Die in Fig. 5 dargestellte Ausführungsform eines derartigen Aufsatzes 60 umfaßt unterseitig eine mit Innengewinde versehene Bohrung 61 zum Befestigen des Aufsatzes 60 auf einer Aufgabeeinrichtung K. Der Transportkopf 22 entspricht im wesentlichen demjenigen der Fig. 3 und 4, wobei hier zusätzlich das Septum 29 und das eingeschraubte Nadelführungsstück 30 eingezeichnet sind, die für den Fall der Probenaufgabe durch eine Spritze benötigt werden, während bei den Ausführungsformen der Fig. 3 und 4 die Probenaufnahme direkt im Probenbehälter P und die Probenaufgabe direkt aus dem Liner 21 erfolgen. Letzteres kann im Zusammenhang mit dem Aufsatz 60 ebenfalls vorgesehen sein.

Der Aufsatz 60 besitzt eine Ausnehmung 62 entsprechend derjenigen des Aufnahmetopfs 6, die mit der Bohrung 61 in Verbindung steht. Trägergas kann über eine Leitung 63 und eine Bohrung 64 sowie eine umlaufende Nut 65 des Transportkopfes 22 dem Inneren des Liners 21 zugeführt werden.

Ein Festspannen des Transportkopfes 22 im Aufsatz 60 erfolgt hierbei über mehrere Kugeln 67, die in Bohrungen 68 des Aufsatzes radial verschiebbar angeordnet sind. Jede Kugel 67 ist über einen zur Kugel 67 hin abgeschrägten, in Axialrichtung des Transportkopfes verschiebbaren Kolben 69 in Richtung auf die Schulter 28 des Transportkopfes 22 verschiebbar. Der Kolben 69 wird von einer Bohrung 70 im Aufsatz 60 abgedichtet aufgenommen und ist in seine in Fig. 5 dargestellte Ausgangsposition durch eine Feder 71 vorgespannt, die sich an einem Deckel 72 des Aufsatzes 60 abstützt. Der Kolben 69 ist über eine Leitung 73 an seiner der Kugel 67 abgewandten Seite mit Druckluft beaufschlagbar, wodurch die Kugel 67 in eine Position auf der schrägen Schulter 28 des Transportkopfes 22 gedrückt wird, so daß letzterer in Eingriff mit der Ausnehmung 62 gehalten wird, solange die Druckluftbeaufschlagung des Kolbens 69 anhält.

Da die Kugeln 67 in der Ausgangsstellung der Kolben 69 lose in den Bohrungen 68 (allerdings gegen ein Herausfallen gesichert) angeordnet sind, können sie beim Einsetzen des Transportkopfes 22 nach außen gedrückt werden, so daß sie das Einsetzen nicht behindern.

Die in Fig. 6 dargestellte Ausführungsform eines Transportkopfes 22 ist septumlos. Stattdessen ist die Bohrung 23 durch eine mittels einer Feder 74 gegen einen Dichtring 75 vorgespannt, schräg zur Bohrung 23 in einer Bohrung 76 verschiebbare Kugel 77 verschlossen, die von einer Spritzennadel beiseite gedrückt werden kann. Die Spritzennadel gelangt beim Einführung zunächst eintrittsseitig mit einem von einem Deckel 78 mit einer Mutter 79 eingespannten Dichtring 80 in dichtenden Eingriff. Zur Montage der Kugel 77 und damit zusammenwirkenden Teile besteht der Transportkopf 22 aus zwei Teilen 22a, 22b, die längs einer Schrägfläche senkrecht zur Bohrung 76 zusammengefügt sind.

Anstatt die Kolben 10 bzw. 69 federvorzuspannen, können diese auch mittels Druckluft hin- und herbewegt werden.

## Patentansprüche

1. Verfahren zur Probenaufgabe für ein Probenanalysegerät (G), das eine Aufgabeeinrichtung (K) für Proben aufweist, die mit auswechselbaren, zumindest eintrittsseitig rohrförmigen, die Probe aufnehmenden Linern (21) bestückbar ist,
wobei die Liner (21), auf die gaseintrittsseitig jeweils ein Transportkopf (22) aufgesetzt ist, der den Liner (21) über eine hiermit reibschlüssige Dichtung (24) hält, an vorbestimmten Plätzen in einem Magazin (M1) und/oder in Probenbehälter (P) eingesteckt angeordnet werden,
eine Wechseleinrichtung (S) verwendet wird, die mit einem Greifer für die Transportköpfe (22) der Liner (21) ausgerüstet ist, und
die Wechseleinrichtung (S) entsprechend einem vorbestimmten Programm den jeweiligen Liner (21) an einem vorbestimmten Platz an seinem Transportkopf (22) ergreift und in die Aufgabeeinrichtung (K) dichtend einsetzt, die Probenaufgabe vorgenommen und anschließend der Liner (21) von der Wechseleinrichtung (S) durch Ergreifen an seinem Transportkopf (22) aus der Aufgabeeinrichtung (K) entfernt wird.

2. Verfahren nach Anspruch 1, **dadurch gekennzeichnet, daß** die Liner (21) von der Wechseleinrichtung (S) in zugehörige Probenbehälter (P) eingesetzt und daraus entnommen werden, die jeweils mit einem Aufnahmetopf (56) für den Transportkopf (22) der Liner (21) versehen sind.

3. Verfahren nach Anspruch 1 oder 2, **dadurch gekennzeichnet, daß** die Transportköpfe (22) der Liner (21) in der Aufgabeeinrichtung (K) mittels Druckluft gespannt bzw. gelöst werden.

4. Verfahren nach einem der Ansprüche 1 bis 3, **dadurch gekennzeichnet, daß** als Wechseleinrichtung (S) ein Autosampler (S) für die automatische Probenaufgabe mit einem Greifer (33) für die Transportköpfe (22) verwendet wird.

5. Verfahren nach einem der Ansprüche 1 bis 4, **dadurch gekennzeichnet, daß** eine Wechseleinrichtung (S) mit einem elektromagnetisch betätigbaren Greifer (33) für die Transportköpfe (22) verwendet wird.

6. Linerhandhabungssystem mit einem Probenanalysegerät (G), das eine Aufgabeeinrichtung (K) für Proben aufweist, die mit auswechselbaren, zumindest eintrittsseitig rohrförmigen, die Probe aufnehmenden Linern (21) bestückbar ist, einem Magazin (M1) zur Aufnahme von Linern (21) und einer Wechseleinrichtung (S) zum Wechseln und Transportieren von Linern (21) zwischen der Aufgabeeinrichtung (K), dem Magazin (M1) und gegebenenfalls Probenbehältern (P) entsprechend einem vorbestimmten Programm,
wobei auf die Liner (21) gaseintrittsseitig jeweils ein Transportkopf (22) aufgesetzt ist, der den Liner (21) über eine hiermit reibschlüssige Dichtung (24) hält,
die Wechseleinrichtung (S) mit einem Greifer für die Transportköpfe (22) der Liner (21) ausgerüstet ist, und
die Aufgabeeinrichtung (K) mit einer Spanneinrichtung zum dichtenden Einspannen des Transportkopfes (22) in die Aufgabeeinrichtung versehen ist.

7. Linerhandhabungssystem nach Anspruch 6, **dadurch gekennzeichnet, daß** die Transportköpfe (22) für einen zumindest eintrittsseitig rohrförmigen Liner (21) mit einer mit einem Dichtungsring (24) versehenen Einstecköffnung (23) zum reibschlüssigen Aufnehmen des Liners (21) und am Außenumfang befindlichen Dichtungsringen (26) ausgebildet sind.

8. Linerhandhabungssystem nach Anspruch 7, **dadurch gekennzeichnet daß** die Transportköpfe (22) eine schräge Schulter (28) an der der Einstecköffnung (23) abgewandten Seite aufweisen.

9. Linerhandhabungssystem nach Anspruch 7 oder 8, **dadurch gekennzeichnet, daß** die Transportköpfe (22) eine umlaufende Nut (34) an der der Einstecköffnung (23) abgewandten Seite aufweisen.

10. Linerhandhabungssystem nach einem der Ansprüche 7 bis 9, **dadurch gekennzeichnet, daß** die Transportköpfe (22) wenigstens eine Gaszuführung (17, 42, 64) zur Einstecköffnung (23) aufweisen.

11. Linerhandhabungssystem nach einem der Ansprüche 7 bis 10, **dadurch gekennzeichnet, daß** die Einstecköffnung (23) als Stufenbohrung durchgehend ausgebildet und eintrittsseitig durch ein Septum (29) oder eine verschiebbare Kugel (77) verschlossen ist.

12. Linerhandhabungssystem nach einem der Ansprüche 8 bis 11, **dadurch gekennzeichnet, daß** die Transportköpfe (22) an der der Einstecköffnung (23) zugewandten Seite der Schulter (28) gestuft und/oder konisch ausgebildet sind.

13. Linerhandhabungssystem nach Anspruch 6, **dadurch gekennzeichnet, daß** die Aufgabeeinrichtung (K) einen Aufnahmetopf (6) mit einer bodenseitigen Durchtrittsöffnung für einen mit einem von dem Aufnahmetopf (6) aufnehmbaren Transportkopf (22) versehenen, zumindest eintrittsseitig rohrförmigen Liner (21), der von dem Transportkopf (22) reibschlüssig gehalten wird, und eine Spanneinrichtung zum Einspannen des Transportkopfes (22) in dem Aufnahmetopf (6) umfaßt.

14. Linerhandhabungssystem nach Anspruch 13, **dadurch gekennzeichnet, daß** die Spanneinrichtung radial bezüglich des Aufnahmetopfs (6) verschiebbare und mit dem Transportkopf (22) in Eingriff bringbare Spannelemente (13, 67) aufweist.

15. Linerhandhabungssystem nach Anspruch 14, **dadurch gekennzeichnet, daß** die Spanneinrichtung Kolben (10, 69) umfaßt, mit denen die Spannelemente (13, 67) verschiebbar sind.

16. Linerhandhabungssystem nach Anspruch 15, **dadurch gekennzeichnet, daß** die Kolben (10, 69) mittels Druckluft hin und her oder gegen eine Federvorspannung verschiebbar sind.

17. Linerhandhabungssystem nach Anspruch 15 oder 16, **dadurch gekennzeichnet, daß** die Kolben (10) radial verschiebbar angeordnet und die Spannelemente mit den Kolben (10) verbundene Spannbacken (13) sind.

18. Linerhandhabungssystem nach Anspruch 15 oder 16, **dadurch gekennzeichnet, daß** die Kolben (69) axial verschiebbar und die Spannelemente radial unter Einwirkung der Kolben (69) verlagerbare Kugeln (67) sind.

19. Linerhandhabungssystem nach Anspruch 6, **dadurch gekennzeichnet, daß** es Probenbehälter (P) mit einem eintrittsseitig angeordneten Flansch (50) aufweist, auf dem zwei mit einer Durchtrittsöffnung versehene Septen (52), zwischen denen eine durchstechbare Folie (53) angeordnet ist, mit einer Kappe (51) befestigt sind, wobei in die Durchtrittsöffnungen ein Führungsrohr (54) mit einem Aufnahmetopf (56) für einen Transportkopf (22), der einen zumindest eintrittsseitig rohrförmigen Liner (21) über eine hiermit reibschlüssige Dichtung (24) hält, nach außen abgedichtet einsetzbar ist.

## Claims

1. A method of sample delivery for a sample analyser (G), which has a delivery device (K) for samples which can be loaded with exchangeable liners (21), which are tubular at least at the inlet end and hold the sample,
the liners (21), on which there is respectively fitted at the gas inlet end a transporting head (22) which holds the liner (21) by means of a seal (24) hereby having a friction fit, being arranged such that they are inserted at predetermined locations in at least one of a magazine (M1) and a sample container (P),
a changing device (S), which is equipped with a gripper for the transporting heads (22) of the liners (21), being used and
on the basis of a predetermined programme, the changing device (2) gripping the respective liner (21) at a predetermined place on its transporting head (22) and inserting it into the delivery device (K) in a sealing manner, the sample delivery being performed and, subsequently, the liner (21) being removed from the delivery device (K) by the changing device (S), by gripping its transporting head (22).

2. The method according to claim 1, **characterized in that** the liners (21) are inserted by the changing device (S) into associated sample containers (P), which are respectively provided with a holding cup (56) for the transporting head (22) of the liners (21), and removed therefrom.

3. The method according to claim 1 or 2, **characterized in that** the transporting heads (22) of the liners (21) are clamped and released in the delivery device (K) by means of compressed air.

4. The method according to one of the claims 1 to 3, **characterized in that** an autosampler (S) is used as the changing device (S) for the automatic sample delivery, with a gripper (33) for the transporting heads (22).

5. The method according to one of the claims 1 to 4, **characterized in that** a changing device (S) with a gripper (33) which can be actuated electromagnetically is used for the transporting heads (22).

6. A liner handling system with a sample analyser (G), which has a delivery device (K) for samples which can be loaded with exchangeable liners (21), which are tubular at least at the inlet end and hold the sample, a magazine (M1) for holding liners (21) and a changing device (S) for changing and transporting liners (21) between the delivery device (K), the magazine (M1) and, if appropriate, sample containers (P) on the basis of a predetermined programme, there being respectively fitted on the liners (21), at the gas inlet end, a transporting head (22) which holds the liner (21) by means of a seal (24) hereby having a friction fit,
the changing device (S) being equipped with a gripper for the transporting heads (22) of the liners (21), and
the delivery device (K) being provided with a clamping device for the sealing clamping of the transporting head (22) into the delivery device.

7. Liner handling system according to claim 6, **characterized in that** the transporting heads (22) for a tubular liner (21) which is tubular at least at the inlet end, with an insertion opening (23), provided with a sealing ring (24), for holding the liner (21) with a friction fit and with sealing rings (26) located on the outer circumference.

8. Liner handling system according to claim 7, **characterized in that** the transporting heads (22) comprise a sloping shoulder (28) on the side remote from the insertion opening (23).

9. Liner handling system according to claim 7 or 8, **characterized in that** the transporting heads (22) comprise a peripheral groove (34) on the side remote from the insertion opening (23).

10. Liner handling system according to one of the claims 7 to 9, **characterized in that** the transporting heads (22) comprise at least one gas supply (17, 42, 64) towards the insertion opening (23).

11. Liner handling system according to one of the claims 7 to 10, **characterized in that** the insertion opening (23) is formed as a stepped bore throughout and is closed at the inlet end by a septum (29) or a displaceable ball (77).

12. Liner handling system according to one of the claims 8 to 11, **characterized in that** the transporting heads (22) are formed in a stepped and/or conical manner on the side of the shoulder (28) that is towards the insertion opening (23).

13. Liner handling system according to claim 6, **characterized in that** the delivery device (K) comprises a holding cup (6) with a bottom through-opening for a liner (21), which is provided with a transporting head (22) which can be held by the holding cup (6), is tubular at least at the inlet end and is held by the transporting head (22) with a friction fit, and comprises a clamping device for clamping the transporting head (22) into the holding cup (6).

14. Liner handling system according to claim 13, **characterized in that** the clamping device has clamping elements (13, 67) which can be displaced radially with respect to the holding cup (6) and can be brought into engagement with the transporting head (22).

15. Liner handling system according to claim 14, **characterized in that** the clamping device comprises pistons (10, 69), with which the clamping elements (13, 67) are displaceable.

16. Liner handling system according to claim 15, **characterized in that** the pistons (10, 69) are displaceable back and forth by means of compressed air or against spring biasing.

17. Liner handling system according to claim 15 or 16, **characterized in that** the pistons (10) are arranged in a radially displaceable manner and the clamping elements are clamping jaws (13) connected to the pistons (10).

18. Liner handling system according to claim 15 or 16, **characterized in that** the pistons (69) are axially displaceable and the clamping elements are balls (67) which can be displaced radially under the effect of the pistons (69).

19. Liner handling system according to claim 6, **characterized in that** it comprises sample containers (P) with a flange (50), which is arranged at the inlet end and on which two septa (52) provided with a through-opening and with a pierceable foil (53) arranged between them are fastened by a cap (51), it being possible to insert into the through-openings, in a manner sealed from the outside, a guiding tube (54) with a holding cup (56) for a transporting head (22) which holds a liner (21) that is tubular at least at the inlet end by means of a seal (24) hereby having a friction fit.

## Revendications

1. Procédé d'alimentation en échantillons pour un appareil d'analyse d'échantillons (G), qui présente un dispositif d'alimentation (K) pour des échantillons, qui peut être doté de liners (21) remplaçables, de forme tubulaire au moins du côté de l'entrée, recevant l'échantillon,
dans lequel les liners (21), sur lesquels respectivement une tête de transport (22) est placée du côté de l'entrée de gaz, laquelle maintient le liner (21) au-dessus d'un joint d'étanchéité (24) relié à friction à celui-ci, sont disposés de manière enfichée au niveau d'emplacements prédéfinis dans un magasin (M1) et/ou dans des contenants d'échantillons (P),
un dispositif d'échange (S) est utilisé, lequel est équipé d'un système de préhension pour les têtes de transport (22) des liners (21), et
le dispositif d'échange (S) saisit, conformément à un programme prédéfini, le liner (21) respectif au niveau d'un emplacement prédéfini au niveau de sa tête de transport (22) et l'insère de manière étanche dans le dispositif d'alimentation (K), l'alimentation en échantillons est effectuée et le liner (21) est immédiatement après éloigné du dispositif d'alimentation (K) par le dispositif d'échange (S) en le saisissant au niveau de sa tête de transport (22).

2. Procédé selon la revendication 1, **caractérisé en ce que** les liners (21) sont insérés dans des contenants d'échantillons (P) associés et en sont retirés par le dispositif d'échange (S), lesquels sont pourvus respectivement d'un pot de réception (56) pour la tête de transport (22) des liners (21).

3. Procédé selon la revendication 1 ou 2, **caractérisé en ce que** les têtes de transport (22) des liners (21) sont serrées ou desserrées au moyen d'air comprimé dans le dispositif d'alimentation (K).

4. Procédé selon l'une quelconque des revendications 1 à 3, **caractérisé en ce qu'**un échantillonneur automatique (S) pour l'alimentation en échantillons automatique avec un système de préhension (33) pour les têtes de transport (22) est utilisé en tant que dispositif d'échange (S).

5. Procédé selon l'une quelconque des revendications 1 à 4, **caractérisé en ce qu'**un dispositif d'échange (S) avec un système de préhension (33) pouvant être actionné de manière électromagnétique pour les têtes de transport (22) est utilisé.

6. Système de manipulation de liners avec un appareil d'analyse d'échantillons (G), qui présente un dispositif d'alimentation (K) pour des échantillons, qui peut être doté de liners (21) remplaçables, de forme tubulaire au moins du côté de l'entrée, recevant l'échantillon, comprenant un magasin (M1) servant à recevoir des liners (21) et un dispositif d'échange (S) servant à échanger et à transporter des liners (21) entre le dispositif d'alimentation (K), le magasin (M1) et éventuellement des contenants d'échantillons (P) conformément à un programme prédéfini, dans lequel respectivement une tête de transport (22) est placée du côté de l'entrée de gaz sur les liners (21), laquelle maintient le liner (21) au-dessus d'un joint d'étanchéité (24) relié à friction à celui-ci,
le dispositif d'échange (S) est équipé d'un système de préhension pour les têtes de transport (22) des liners (21), et
le dispositif d'alimentation (K) est pourvu d'un dispositif de serrage servant à enserrer de manière étanche la tête de transport (22) dans le dispositif d'alimentation.

7. Système de manipulation de liners selon la revendication 6, **caractérisé en ce que** les têtes de transport (22) pour un liner (21) de forme tubulaire au moins du côté de l'entrée sont réalisées avec une ouverture d'enfichage (23) pourvue d'une bague d'étanchéité (24) servant à recevoir par friction le liner (21) et des bagues d'étanchéité (26) se trouvant au niveau de la périphérie extérieure.

8. Système de manipulation de liners selon la revendication 7, **caractérisé en ce que** les têtes de transport (22) présentent un épaulement (28) oblique au niveau du côté opposé à l'ouverture d'enfichage (23).

9. Système de manipulation de liners selon la revendication 7 ou 8, **caractérisé en ce que** les têtes de transport (22) présentent une rainure (34) périphérique au niveau du côté opposé à l'ouverture d'enfichage (23).

10. Système de manipulation de liners selon l'une quelconque des revendications 7 à 9, **caractérisé en ce que** les têtes de transport (22) présentent au moins une arrivée de gaz (17, 42, 64) vers l'ouverture d'enfichage (23).

11. Système de manipulation de liners selon l'une quelconque des revendications 7 à 10, **caractérisé en ce que** l'ouverture d'enfichage (23) est réalisée en continu sous la forme d'un alésage étagé et est fermée du côté de l'entrée par une cloison (29) ou une bille (77) pouvant être coulissée.

12. Système de manipulation de liners selon l'une quelconque des revendications 8 à 11, **caractérisé en ce que** les têtes de transport (22) sont réalisées de manière étagée et/ou conique au niveau du côté, tourné vers l'ouverture d'enfichage (23), de l'épaulement (28).

13. Système de manipulation de liners selon la revendication 6, **caractérisé en ce que** le dispositif d'alimentation (K) comprend un pot de réception (6) avec une ouverture de passage du côté du fond pour un liner (21) de forme tubulaire au moins du côté de l'entrée pourvu d'une tête de transport (22) pouvant être reçue par le pot de réception (6), lequel liner est maintenu à friction par la tête de transport (22), et un dispositif de serrage servant à enserrer la tête de transport (22) dans le pot de réception (6).

14. Système de manipulation de liners selon la revendication 13, **caractérisé en ce que** le dispositif de serrage présente des éléments de serrage (13, 67) pouvant être coulissés de manière radiale par rapport au pot de réception (6) et pouvant être amenés en prise avec la tête de transport (22).

15. Système de manipulation de liners selon la revendication 14, **caractérisé en ce que** le dispositif de serrage comprend des pistons (10, 69), avec lesquels les éléments de serrage (13, 67) peuvent être coulissés.

16. Système de manipulation de liners selon la revendication 15, **caractérisé en ce que** les pistons (10, 69) peuvent être coulissés au moyen d'air comprimé en effectuant des mouvements de va-et-vient ou à l'encontre d'une précontrainte de ressort.

17. Système de manipulation de liners selon la revendication 15 ou 16, **caractérisé en ce que** les pistons (10) sont disposés de manière à pouvoir être coulissés de manière radiale et les éléments de serrage sont des mâchoires de serrage (13) raccordées aux pistons (10).

18. Système de manipulation de liners selon la revendication 15 ou 16, **caractérisé en ce que** les pistons (69) peuvent être coulissés de manière axiale et les éléments de serrage sont des billes (67) pouvant être déplacées de manière radiale sous l'effet des pistons (69).

19. Système de manipulation de liners selon la revendication 6, **caractérisé en ce qu'**il présente des contenants d'échantillons (P) avec une bride (50) disposée du côté de l'entrée, sur laquelle deux cloisons (52) avec une ouverture de passage, entre lesquelles un film (53) pouvant être transpercé est disposé, sont fixées à un capot (51),
dans lequel un tube de guidage (54) avec un pot de réception (56) pour une tête de transport (22), qui maintient un liner (21) de forme tubulaire au moins du côté de l'entrée par l'intermédiaire d'un joint d'étanchéité (24) relié à friction au liner, peut être inséré de manière étanchéifiée vers l'extérieur dans les ouvertures de passage.
